# NEUE EUROPÄISCHE PATENTSCHRIFT

(11) **EP 3 270 680 B2**
(45) Veröffentlichungstag und Bekanntmachung des Hinweises auf die Entscheidung über den Einspruch: **11.09.2024**
(45) Hinweis auf die Patenterteilung: 12.12.2018
(21) Anmeldenummer: 15839097.1
(22) Anmeldetag: 22.12.2015
(51) Int. Cl.: A01B 39/08, A01B 39/18

(54) **BODENBEARBEITUNGSGERÄT; VERFAHREN ZUR HÖHENFÜHRUNG MINDESTENS EINES FINGERHACKENWERKZEUGES ÜBER EINER REIHE IN EINER REIHENKULTUR**
SOIL-WORKING DEVICE; METHOD FOR THE HEIGHT GUIDANCE OF AT LEAST ONE FINGER-WEEDER TOOL ABOVE A ROW IN A ROW PLANTATION
OUTIL POUR TRAVAILLER LE SOL; PROCÉDÉ POUR GUIDER EN HAUTEUR AU MOINS UNE SARCLEUSE À DOIGTS SUR UN RANG DANS UNE CULTURE EN RANGS

(30) Priorität: 16.03.2015 DE 102015003441
(43) Veröffentlichungstag der Anmeldung: 24.01.2018
(73) Patentinhaber: K.U.L.T. Kress Umweltschonende Landtechnik GmbH, 75057 Kürnbach (DE)
(72) Erfinder: KIRCHHOFF, Christian, 71665 Vaihingen/Enz (DE); DÜLKS, André, 40668 Meerbusch (DE)
(74) Vertreter: Patentanwälte Schuster, Müller & Partner mbB
(86) Internationale Anmeldenummer: PCT/DE2015/000610
(87) Internationale Veröffentlichungsnummer: WO 2016/146091

(56) Entgegenhaltungen:
- EP-A1- 0 407 896
- EP-A1- 1 116 427
- EP-B1- 1 127 481
- DE-U1- 20 307 814
- DE-U1- 29 914 006
- JP-A- 2006 211 942
- US-A- 3 082 829
- US-A- 4 518 043

## Beschreibung

### Stand der Technik

Die Erfindung geht aus von einem Bodenbearbeitungsgerät für Reihenkulturen, nach der Gattung des Anspruchs 1, und einem Verfahren zur Höhenführung mindestens eines Fingerhackenwerkzeuges über einer Reihe in einer Reihenkultur, nach der Gattung des Anspruchs 11.

Bodenbearbeitungsgeräte, die zur mechanischen Bodenbearbeitung und insbesondere zur Beikrautbekämpfung innerhalb einer oder mehrerer Kulturreihen gleichzeitig eingesetzt werden, gehören seit langem zum Stand der Technik. So sind aus der europäischen Patentschrift EP 1 127 481 B1 und der europäischen Patentanmeldung 1 116 427 A1 eine Fingerhacke zur Unkrautbeseitigung, mit mechanischem Antrieb durch Bodenantriebselemente bekannt, die mit über den Bodenantriebselementen angeordneten, drehbeweglichen Jätefingern ausgestattet sind. Zwar ist es mit dieser vorbekannten Fingerhacke möglich, die Bodenbearbeitung von der Reihenmitte in die unmittelbare Nähe der Kulturpflanzen zu verlagern, doch gestaltet sich die Anpassung der Fingerhackenwerkzeuge an das Bodenrelief als schwierig.

### Die Erfindung und ihre Vorteile

Das erfindungsgemäße Bodenbearbeitungsgerät für Reihenkulturen, mit den kennzeichnenden Merkmalen des Anspruchs 1, und das erfindungsgemäße Verfahren zur Höhenführung mindestens eines Fingerhackenwerkzeuges über einer Reihe in einer Reihenkultur, mit den kennzeichnenden Merkmalen des Anspruchs 11, haben demgegenüber den Vorteil, dass das Bodenbearbeitungsgerät, das einen Rahmen und mindestens einem Träger aufweist, an dem mindestens ein Fingerhackenwerkzeug, das insbesondere passiv antreibbar ausgestaltet ist, angeordnet ist, das in einer Arbeitsposition zur Bodenbearbeitung in einem Anstellwinkel zum Boden ausgerichtet ist, wobei der Träger eines sich in der Arbeitsposition befindlichen Fingerhackenwerkzeuges über einer Reihe der Reihenkultur angeordnet ist, mindestens eine den Anstellwinkel eines in Arbeitsposition befindlichen Fingerhackenwerkzeuges konstant haltende Höhenführungseinrichtung aufweist. Sollten an einem Träger zwei Fingerhackenwerkzeuge angeordnet sein, so sind diese bevorzugt mit den Jätefingern im Boden zueinander ausgerichtet. Durch den Anstellwinkel des Fingerhackenwerkzeuges kann Einfluss darauf genommen werden, ob tendenziell Erde aus der Reihe ausgetragen oder in diese eingetragen wird. Ob ein Eintrag oder ein Austrag in die Reihe gewünscht wird, ist von den ackerbaulichen Gegebenheiten abhängig. Unabhängig davon sollte allerdings während der Arbeit dieser Anstellwinkel auch bei Höhenunebenheiten im Feld konstant gehalten werden. Ein eingestellter Anstellwinkel bleibt somit erhalten, so dass dieser sich in Arbeitsposition bei Höhenanpassung an den Boden nicht verändert.

Nach einer vorteilhaften Ausgestaltung des erfindungsgemäßen Bodenbearbeitungsgeräts sind zur Bearbeitung einer Reihe der Reihenkultur an jedem Träger mindestens zwei Fingerhackenwerkzeuge angeordnet. Da sich ein Träger während der Bodenbearbeitung über einer Kulturreihe bzw. über nah beieinander liegenden Kulturreihen (Mehrfachreihen z.B. Doppel- bzw. Tripelreihen) befindet, erfahren die Fingerhackenwerkzeuge, die an dem selben Träger angeordnet sind, somit die selbe Höhenführung, so dass sie beispielsweise links und rechts einer Kulturreihe bzw. links und rechts von Mehrfachreihen bzw. zwischen Mehrfachreihen präziser geführt werden. Diese Anordnung ermöglicht, dass beispielsweise durch ein an dem Träger angeordnetes Fingerhackenwerkzeug die linke Seite der Kulturreihe und durch ein zweites an dem Träger angeordnetes Fingerhackenwerkzeug die rechte Seite der Kulturreihe bearbeitet wird.

Nach einer zusätzlichen vorteilhaften Ausgestaltung des erfindungsgemäßen Bodenbearbeitungsgeräts ist eine Höhenführungseinrichtung verstellbar und/oder ist eine Höhenführungseinrichtung am Rahmen, an mindestens einem Träger, an mindestens einem Querträger, an mindestens einem Längsträger, an mindestens einem Fingerhackenträger, an mindestens einem Werkzeugträger und/oder an mindestens einem Fingerhackenwerkzeug angeordnet.

Nach einer zusätzlichen vorteilhaften Ausgestaltung des erfindungsgemäßen Bodenbearbeitungsgeräts weist eine Höhenführungseinrichtung mindestens einen Parallelogrammlenker, mindestens eine Teleskopeinrichtung (Teleskopaufhängung), mindestens eine Sensoreinrichtung, mindestens ein Stützrad, das bevorzugt neben der Reihe läuft, mindestens ein Stützradpaar, mindestens eine Tiefenbegrenzung und/oder mindestens ein Gleitelement (z.B. kalottenförmiges Gleitelement) auf. Beispielsweise können an einem Träger ein Parallelogrammlenker oder zwei parallele Parallelogrammlenker angeordnet sein. Denkbar ist auch, dass ein Stützrad an dem Rahmen oder an einem Träger vor oder hinter einem Fingerhackenwerkzeug angeordnet ist. Bevorzugt ist das Stützrad in der Höhe verstellbar (z.B. mechanisch, hydraulisch, pneumatisch und/oder elektrisch), insbesondere mittels einer Höhenführungsvorrichtung.

Nach einer zusätzlichen vorteilhaften Ausgestaltung des erfindungsgemäßen Bodenbearbeitungsgeräts weist die Höhenführungseinrichtung mindestens eine Belastungs- und/oder Entlastungsvorrichtung (z.B. eine Feder, einen Hydraulikzylinder) auf.

Nach einer diesbezüglich vorteilhaften Ausgestaltung des erfindungsgemäßen Bodenbearbeitungsgeräts ist die Belastungs- und/oder Entlastungsvorrichtung verstellbar, insbesondere mechanisch, hydraulisch, pneumatisch und/oder elektrisch verstellbar, wodurch der Anpressdruck variiert werden kann.

Nach einer zusätzlichen vorteilhaften Ausgestaltung des erfindungsgemäßen Bodenbearbeitungsgeräts ist die Höhenführungseinrichtung durch eine Vorrichtung zum Ausheben aushebbar. Dadurch kann der Träger inklusive allen untergeordneten Baugruppen nach oben geschwenkt werden. Dadurch erhöht sich die Bodenfreiheit, wodurch z.B. der Transport erleichtert wird oder am Vorgewende ein besseres Handling ermöglicht wird.

Nach einer zusätzlichen vorteilhaften Ausgestaltung des erfindungsgemäßen Bodenbearbeitungsgeräts ist an dem Bodenbearbeitungsgerät (insbesondere an einem Träger und/oder Querträger) mindestens ein weiteres Werkzeug (z.B. ein Winkelmesser, Zinken, Scheiben, Gänsefußschare) angeordnet, wodurch das Werkzeug und das Fingerhackenwerkzeug gemeinsam geführt sind.

Nach einer diesbezüglich vorteilhaften Ausgestaltung des erfindungsgemäßen Bodenbearbeitungsgeräts weist mindestens ein Werkzeug eine Arbeitsposition und eine Ruheposition auf. Bevorzugt werden ein oder mehrere Werkzeuge durch mindestens eine Aushebevorrichtung aus der Arbeitsposition in die Ruheposition verbracht. Somit ist ein schneller Wechsel zu einer Arbeit mit nur einem Teil der Werkzeuge möglich, was aus ackerbaulichen Notwendigkeiten Sinn ergeben kann.

Nach einer zusätzlichen vorteilhaften Ausgestaltung des erfindungsgemäßen Bodenbearbeitungsgeräts weist mindestens ein Fingerhackenwerkzeug eine Arbeitsposition und eine Ruheposition auf. Bevorzugt werden ein oder mehrere Fingerhackenwerkzeuge durch mindestens eine Aushebevorrichtung aus der Arbeitsposition in die Ruheposition verbracht.

Nach einer vorteilhaften Ausgestaltung des erfindungsgemäßen Verfahrens zur Bearbeitung eines Bodens in einer Reihenkultur mittels eines Bodenbearbeitungsgerätes, das mindestens eines Fingerhackenwerkzeuges aufweist, das in einer Arbeitsposition einen Anstellwinkel zum Boden aufweist, wobei der Anstellwinkel des in Arbeitsposition befindlichen Fingerhackenwerkzeuges mittels mindestens einer Höhenführungseinrichtung des Bodenbearbeitungsgerätes während der Bearbeitung des Bodens konstant gehalten wird, wird der Anstellwinkel des Fingerhackenwerkzeuges zum Boden vor der Bearbeitung des Bodens eingestellt.

Nach einer zusätzlichen vorteilhaften Ausgestaltung des erfindungsgemäßen Verfahrens wird als Höhenführungseinrichtung mindestens ein Parallelogrammlenker, mindestens eine Teleskopeinrichtung, mindestens eine Sensoreinrichtung, mindestens ein Stützrad, das bevorzugt neben der Reihe läuft, mindestens ein Stützradpaar, mindestens eine Tiefenbegrenzung und/oder mindestens ein Gleitelement eingesetzt.

Nach einer zusätzlichen vorteilhaften Ausgestaltung des erfindungsgemäßen Verfahrens wird als Bodenbearbeitungsgerät ein Bodenbearbeitungsgerät gemäß einem der Ansprüche 1 bis 10 eingesetzt.

Weitere Vorteile und vorteilhafte Ausgestaltung der Erfindung sind der nachfolgenden Beschreibung, der Zeichnung und den Ansprüchen entnehmbar.

### Zeichnung

Ein bevorzugtes Ausführungsbeispiel des erfindungsgemäßen Gegenstands ist in der Zeichnung dargestellt und wird im Folgenden näher erläutert. Es zeigen
- Fig. 1: eine perspektivische Detailansicht eines erfindungsgemäßen Bodenbearbeitungsgerätes,
- Fig. 2: eine perspektivische Ansicht einer möglichen Ausführungsform eines Fingerhackenwerkzeuges,
- Fig. 3: eine Aufsicht einer weiteren möglichen Ausführungsform eines Fingerhackenwerkzeuges,
- Fig. 4: eine Seitenansicht des Fingerhackenwerkzeuges gemäß Fig. 3,
- Fig. 5: eine Schnittzeichnung des Fingerhackenwerkzeuges gemäß der Schnittlinie A - A aus Fig. 3,
- Fig. 6: eine Schnittzeichnung des Fingerhackenwerkzeuges gemäß der Schnittlinie A - A aus Fig. 3, bei dem zusätzlich eine kalottenförmige Höhenführung angeordnet ist,
- Fig. 7: eine Schnittzeichnung des Fingerhackenwerkzeuges gemäß der Schnittlinie A - A aus Fig. 3, bei dem an den Jätefingern zusätzlich ein Löffel angeordnet ist,
- Fig. 8: eine perspektivische Detailansicht eines erfindungsgemäßen Bodenbearbeitungsgerätes 1 für Reihenkulturen,
- Fig. 9: eine Detailansicht eines erfindungsgemäßen Bodenbearbeitungsgerätes,
- Fig. 10: eine perspektivische Ansicht einer Teleskopaufhängung,
- Fig. 11: eine Seitenansicht der Teleskopaufhängung, aus Fig. 10,
- Fig. 12: eine perspektivische Ansicht einer Teleskopaufhängung in einer anderen Ausführungsform und
- Fig. 13: eine Detailansicht A der Teleskopaufhängung aus Fig. 12.

### Beschreibung des Ausführungsbeispiels

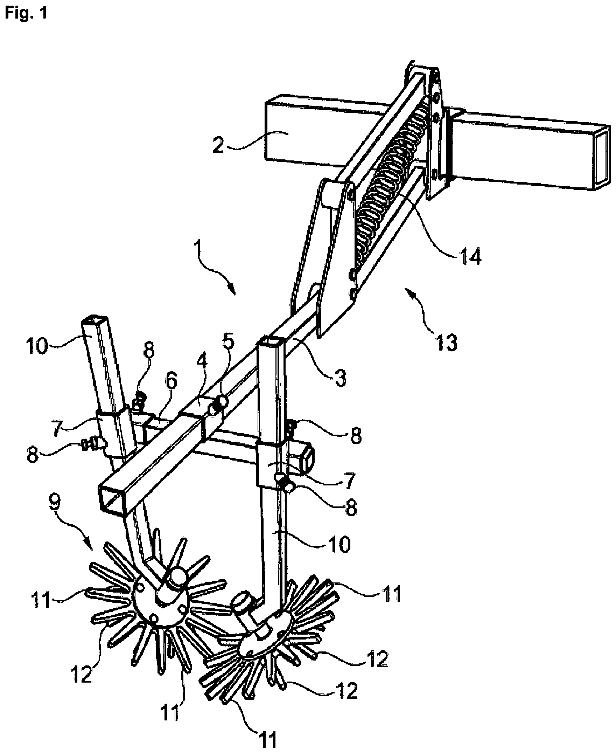

Fig. 1 zeigt eine perspektivische Detailansicht eines erfindungsgemäßen Bodenbearbeitungsgerätes 1 für Reihenkulturen, bei dem an einen Rahmen 2 ein Träger 3 angeordnet ist. An dem Träger 3 ist verschieblich mittels einer Halterung 4, die ein Fixiermittel 5 aufweist, ein Querträger 6 angebracht. Zur Bearbeitung einer Reihe sind an dem Querträger 6 verschieblich mittels Halterungen 7, die Fixiermittel 8 aufweisen, Fingerhackenwerkzeuge 9 angebracht. Ein Fingerhackenwerkzeug 9 besteht insbesondere aus einem Fingerhackenträger 10, an dem drehbar die Jätefinger 11 angeordnet sind. Dabei erfolgt der Antrieb mechanisch mittels der über den Boden streifenden Bodenantriebselemente 12. Selbstverständlich ist es auch denkbar, dass der Querträger 6 mehrere Reihen der Reihenkultur überspannt, so dass dementsprechend mehr Fingerhackenwerkzeuge 9 an dem Querträger 6 angeordnet werden. Um die Fingerhackenwerkzeuge 9 exakt an das Bodenrelief anzupassen, weist der Träger 3 einen Parallelogrammlenker 13 auf. Mittels einer Belastungs- und/oder Entlastungsvorrichtung 14, die bevorzugt hydraulisch, pneumatisch und/oder elektrisch verstellbar ist, kann die Wirkung des Parallelogrammlenkers 13 auf die jeweiligen Gegebenheiten beim Einsatz des erfindungsgemäßen Bodenbearbeitungsgerätes 1 eingestellt werden.

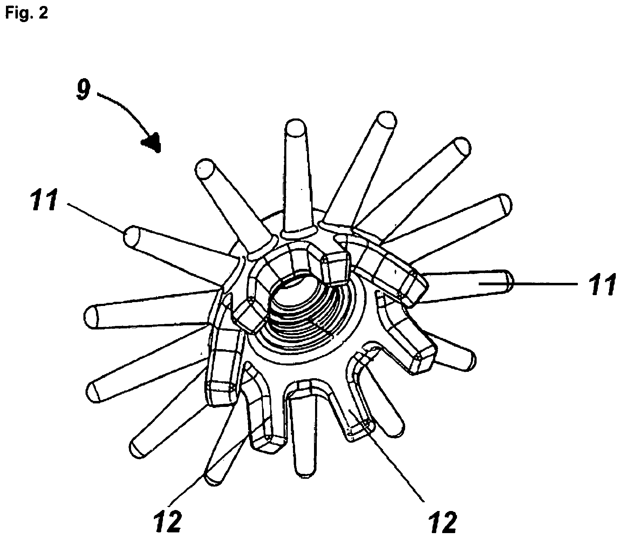

Fig. 2 zeigt eine perspektivische Ansicht einer möglichen Ausführungsform eines Fingerhackenwerkzeuges 9.

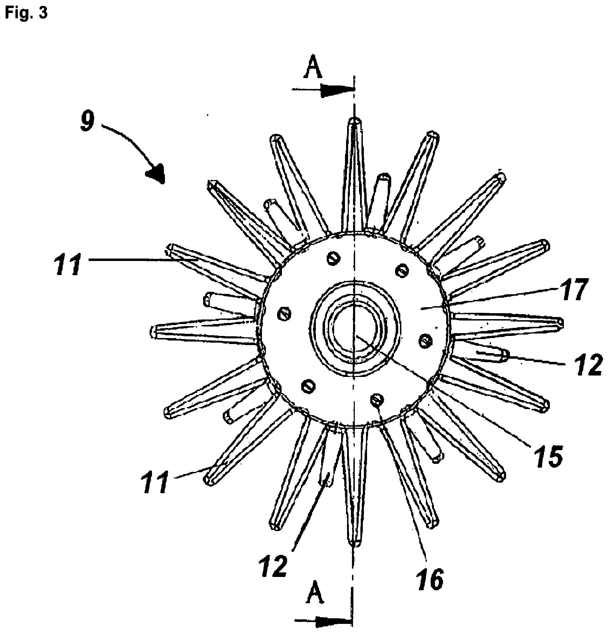

Fig. 3 zeigt eine Aufsicht einer weiteren möglichen Ausführungsform eines Fingerhackenwerkzeuges 9, das um eine Drehachse 15 drehbar an dem nicht dargestellten Fingerhackenträger anordbar ist. Mittels Verschraubungen 16 ist eine Deckplatte 17 mit den Jätefinger 11 verbunden.

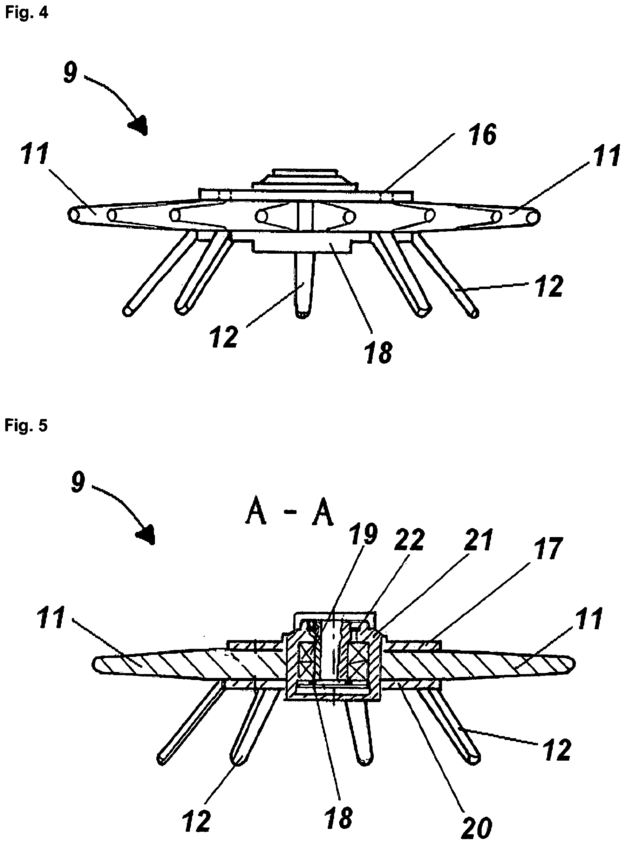

Fig. 4 zeigt eine Seitenansicht des Fingerhackenwerkzeuges 9 gemäß Fig. 3. Dabei wird ersichtlich, dass eine Antriebsplatte 18, an der die Bodenantriebselemente 12 angeordnet sind, mit den Jätefingern 11 verbunden ist.

Fig. 5 zeigt eine Schnittzeichnung des Fingerhackenwerkzeuges 9 gemäß der Schnittlinie A - A aus Fig. 3. Das Fingerhackenwerkzeug 9 weist eine Lagerung aus einem oder mehreren Wälzlagern 19 auf, die staubdicht und nässegeschützt gekapselt sind und mittels Sprengring 20 in der Buchse 21 positioniert werden. Die Abdichtung des Fingerhackenwerkzeuges 9 in Richtung Aufhängung übernimmt der Wellendichtungsring 22.

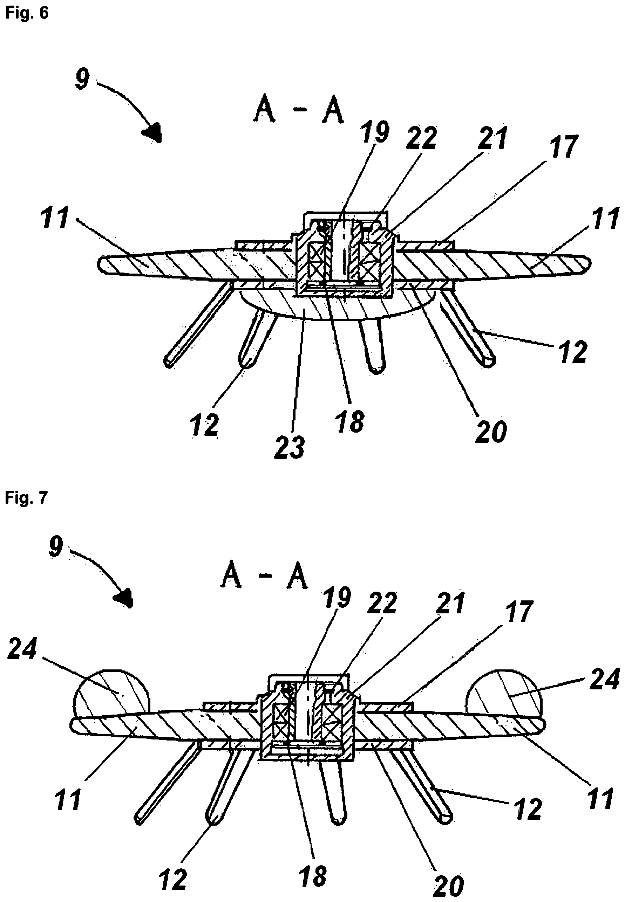

Fig. 6 zeigt eine Schnittzeichnung des Fingerhackenwerkzeuges 9 gemäß der Schnittlinie A - A aus Fig. 3, bei dem zusätzlich eine kalottenförmige Höhenführung 23 (Gleitelement) angeordnet ist.

Fig. 7 zeigt eine Schnittzeichnung des Fingerhackenwerkzeuges 9 gemäß der Schnittlinie A - A aus Fig. 3, bei dem an den Jätefingern 11 zusätzlich ein Löffel 24, der zur zusätzlichen Bodendurchmischung dient, angeordnet ist. Denkbar ist auch, dass Löffel 24 an der Unterseite eines Jätefingers 11 angeordnet sind oder dass Löffel 24 an der Unter- und Oberseite von Jätefingern 11 angeordnet sind.

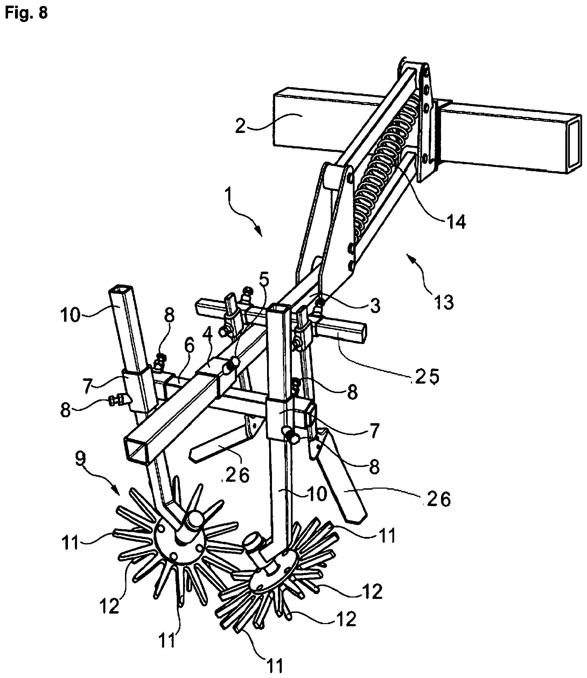

Fig. 8 zeigt eine perspektivische Detailansicht eines erfindungsgemäßen Bodenbearbeitungsgerätes 1 für Reihenkulturen, bei dem an dem Träger 3 ein zusätzlicher Querträger 25 angeordnet ist. An dem Querträger 25 sind Werkzeuge befestigt, die im vorliegenden Fall als Winkelmesser 26 ausgestaltet sind.

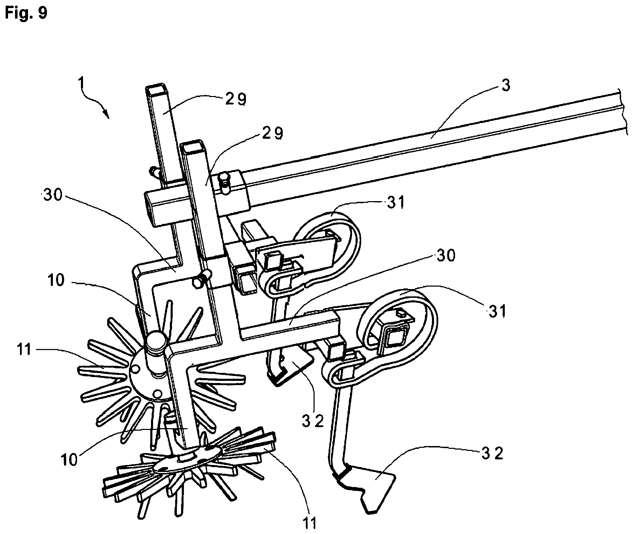

Fig. 9 zeigt eine Detailansicht eines erfindungsgemäßen Bodenbearbeitungsgerätes 1, bei dem an einem Werkzeugträger 29 ein Längsträger 30 angeordnet ist, wobei an einem Ende ein Fingerhackenträger 10 abgeht und am anderen Ende eine Vibrofeder 31 mit Gänsefußschar 32 montiert ist.

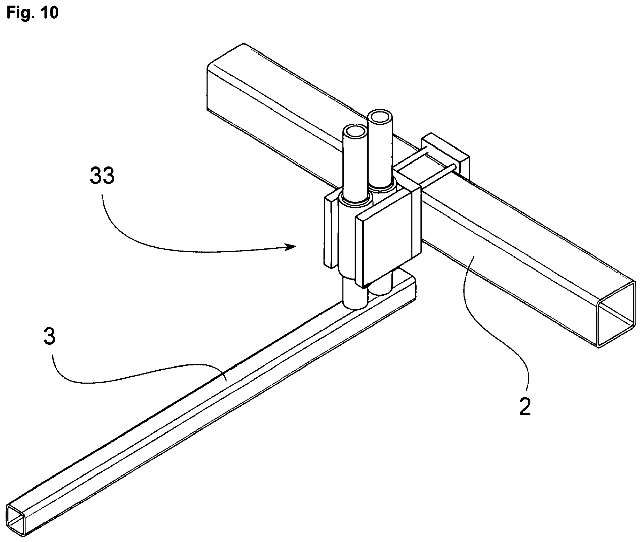

Fig. 10 zeigt eine perspektivische Ansicht einer Teleskopaufhängung 33, durch die eine Höhenverschiebung des Trägers 3 ermöglicht wird. Bevorzugt ist die Teleskopaufhängung 33 vertikal verschiebbar, wobei die Verschiebbarkeit dadurch realisiert wird, dass eine Ebene feststeht, und die zweite Ebene über die erste gleitet (wie in Fig. 10 dargestellt) oder z. B. rollt. Die Teleskopaufhängung 33 hat gegenüber einem Parallelogramm den Vorteil, dass sie kürzer ist, d.h. bei einem Anbau zwischen den Achsen des Traktors resultiert weniger Platzbedarf oder im Frontanbau verlagert sich der Schwerpunkt hin zum Schlepper.

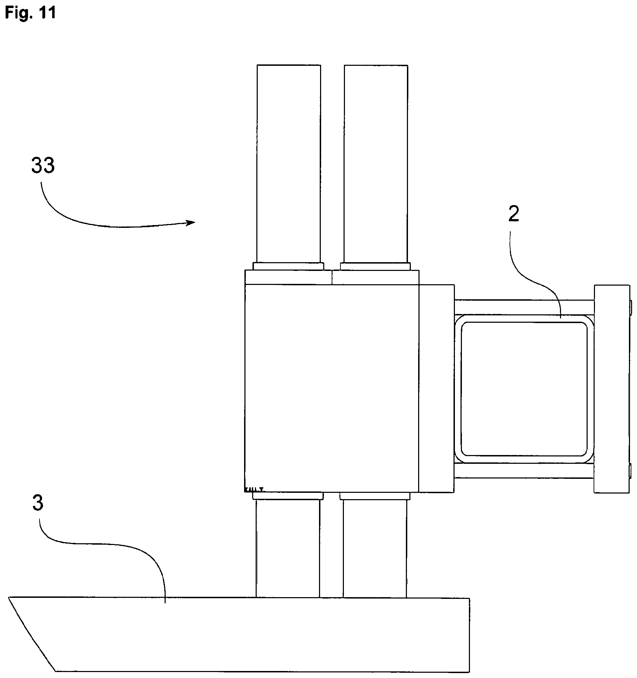

Fig. 11 zeigt eine Seitenansicht der Teleskopaufhängung 33, aus Fig. 10.

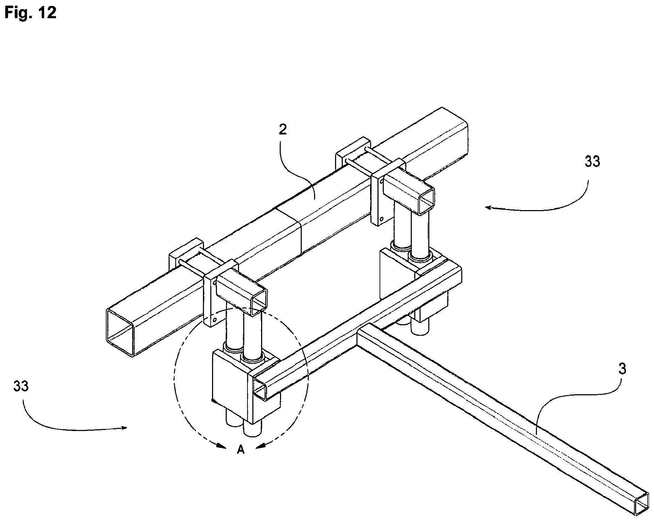

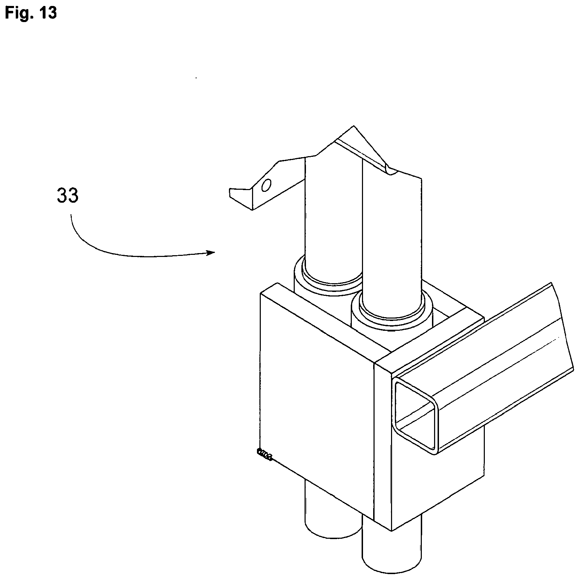

Teleskopaufhängungen 33 benötigen in der Vertikalen relativ viel Platz. Da bei einem Anbau zwischen den Achsen des Traktors z.B. der Platz in der Vertikalen limitiert sein kann, zeigt Fig. 13 eine perspektivische Ansicht einer Teleskopaufhängung 33 in einer anderen Ausführungsform, die platzsparender ist. Hierbei ist das Teleskop so montiert, dass die Teleskopaufhängung 33 vom Rahmen 2 nach unten zeigt. Aufgrund der dadurch verbleibenden geringen Durchgangshöhe wird bei einer solch gearteten Montage die Teleskopaufhängung 33 vorzugsweise neben der Reihe montiert. Um die entstehenden Kräfte trotzdem optimal aufnehmen zu können, kann der Träger 3, wie in Fig. 12 dargestellt, zwischen zwei Teleskopaufhängungen 33 montiert werden.

Fig. 13 zeigt eine Detailansicht A der Teleskopaufhängung 33 aus Fig. 12.

Um die Hebelkräfte die am Träger 3 entstehen, besser abfangen zu können, können auch mehrere der erklärten Teleskopaufhängung 33 nebeneinander oder - wie in den Abbildungen dargestellt - hintereinander angeordnet sein.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Bodenbearbeitungsgerät
- 2: Rahmen
- 3: Träger
- 4: Halterung
- 5: Fixiermittel
- 6: Querträger
- 7: Halterung
- 8: Fixiermittel
- 9: Fingerhackenwerkzeug
- 10: Fingerhackenträger
- 11: Jätefinger
- 12: Bodenantriebselement
- 13: Parallelogrammlenker
- 14: Belastungs- und/oder Entlastungsvorrichtung
- 15: Drehachse
- 16: Verschraubung
- 17: Deckplatte
- 18: Antriebsplatte
- 19: Wälzlager
- 20: Sprengring
- 21: Buchse
- 22: Wellendichtungsring
- 23: Kalottenförmige Höhenführung
- 24: Löffel
- 25: Querträger
- 26: Winkelmesser
- 29: Werkzeugträger
- 30: Längsträger
- 31: Vibrofeder
- 32: Gänsefußschar
- 33: Teleskopaufhängung

## Patentansprüche

1. Bodenbearbeitungsgerät (1) für Reihenkulturen,
- mit einem Rahmen (2) und
- mit mindestens einem Träger (3), an dem mindestens ein Fingerhackenwerkzeug (9) angeordnet ist, wobei das Fingerhackenwerkzeug (9) mittels eines Querträgers (6) an dem Träger (3) angeordnet und in einer Arbeitsposition zur Bodenbearbeitung in einem Anstellwinkel zum Boden ausgerichtet ist,
**dadurch gekennzeichnet,**
**dass** mindestens ein Träger (3) über einer Reihe der Reihenkultur angeordnet ist und zur Bearbeitung dieser Reihe der Reihenkultur mindestens ein an diesem Träger (3) mittels eines Querträgers (6) angeordnetes Fingerhackenwerkzeug (9) angeordnet ist und das Bodenbearbeitungsgerät (1) zur Konstanthaltung des Anstellwinkels zum Boden mindestens eine Höhenführungseinrichtung aufweist.

2. Bodenbearbeitungsgerät (1), nach Anspruch 1,
**dadurch gekennzeichnet,**
**dass** zur Bearbeitung einer Reihe der Reihenkultur an jedem Träger (3) mindestens zwei Finger-hackenwerkzeuge (9) angeordnet sind.

3. Bodenbearbeitungsgerät (1), nach Anspruch 1 oder Anspruch 2,
**dadurch gekennzeichnet,**
**dass** eine Höhenführungseinrichtung verstellbar ist und/oder eine Höhenführungseinrichtung am Rahmen (2), an mindestens einem Träger (3), an mindestens einem Querträger (6, 25), an mindestens einem Längsträger (30), an mindestens einem Fingerhackenträger (10), an mindestens einem Werkzeugträger (29) und/oder an mindestens einem Fingerhackenwerkzeug (9) angeordnet ist.

4. Bodenbearbeitungsgerät (1), nach einem der vorhergehenden Ansprüche,
**dadurch gekennzeichnet,**
**dass** eine Höhenführungseinrichtung mindestens ein Parallelogrammlenker (13), mindestens eine Teleskopeinrichtung, mindestens eine Sensoreinrichtung, mindestens ein Stützrad, mindestens ein Stützradpaar, mindestens eine Tiefenbegrenzung und/oder mindestens ein Gleitelement aufweist.

5. Bodenbearbeitungsgerät (1), nach einem der vorhergehenden Ansprüche, **dadurch gekennzeichnet,**
**dass** die Höhenführungseinrichtung mindestens eine Belastungs- und/oder Entlastungsvorrichtung (14) aufweist.

6. Bodenbearbeitungsgerät (1), nach Anspruch 5,
**dadurch gekennzeichnet,**
**dass** die Belastungs- und/oder Entlastungsvorrichtung (14) verstellbar ist.

7. Bodenbearbeitungsgerät (1), nach einem der vorhergehenden Ansprüche, **dadurch gekennzeichnet,**
**dass** die Höhenführungseinrichtung durch eine Vorrichtung zum Ausheben aushebbar ist.

8. Bodenbearbeitungsgerät (1), nach einem der vorhergehenden Ansprüche, **dadurch gekennzeichnet,**
**dass** an dem Bodenbearbeitungsgerät (1) mindestens ein weiteres Werkzeug angeordnet ist.

9. Bodenbearbeitungsgerät (1), nach Anspruch 8,
**dadurch gekennzeichnet,**
**dass** mindestens ein Werkzeug eine Arbeitsposition und eine Ruheposition aufweist.

10. Bodenbearbeitungsgerät (1), nach einem der vorhergehenden Ansprüche,
**dadurch gekennzeichnet,**
**dass** mindestens ein Fingerhackenwerkzeug (9) eine Arbeitsposition und eine Ruheposition aufweist.

11. Verfahren zur Höhenführung mindestens eines Fingerhackenwerkzeuges über einer Reihe in einer Reihenkultur mittels eines Bodenbearbeitungsgerätes (1), das mindestens einen Träger (3) aufweist, an dem mindestens ein Fingerhackenwerkzeug (9) angeordnet ist, wobei das Fingerhackenwerkzeug (9) mittels eines Querträgers (6) an dem Träger (3) angeordnet ist und das Fingerhackenwerkzeug (9) in einer Arbeitsposition einen Anstellwinkel zum Boden aufweist,
**dadurch gekennzeichnet,**
**dass** mindestens ein Träger (3) über einer Reihe der Reihenkultur geführt wird und zur Bearbeitung einer Reihe der Reihenkultur mindestens ein an diesem Träger (3) mittels eines Querträgers (6) angeordnetes Fingerhackenwerkzeug (9) angeordnet ist und der Anstellwinkel des Fingerhackenwerkzeuges (9) in Arbeitsposition mittels mindestens einer Höhenführungseinrichtung des Bodenbearbeitungsgerätes (1) während der Bearbeitung des Bodens konstant gehalten wird.

12. Verfahren, nach Anspruch 11,
**dadurch gekennzeichnet,**
**dass** der Anstellwinkel des Fingerhackenwerkzeuges (9) zum Boden vor der Bearbeitung des Bodens eingestellt wird.

13. Verfahren, nach Anspruch 11 oder Anspruch 12,
**dadurch gekennzeichnet,**
**dass** als Höhenführungseinrichtung mindestens ein Parallelogrammlenker (13), mindestens eine Teleskopeinrichtung, mindestens eine Sensoreinrichtung, mindestens ein Stützrad, mindestens ein Stützradpaar, mindestens eine Tiefenbegrenzung und/oder mindestens ein Gleitelement eingesetzt wird.

14. Verfahren, nach einem der Ansprüche 11 bis 13,
**dadurch gekennzeichnet,**
**dass** als Bodenbearbeitungsgerät (1) ein Bodenbearbeitungsgerät (1) gemäß einem der Ansprüche 1 bis 10 eingesetzt wird.

## Claims

1. A tillage device (1) for row crop plantations, including
- a chassis (2) and
- at least one support (3) on which at least one finger hoeing tool (9) is arranged, said finger hoeing tool (9) being disposed on the support (3) by means of a cross member (6) and being oriented, when in a working position for tillage, at an appropriate angle of attack with respect to the soil,
**characterised in that**
at least one support (3) is disposed above one row of the row crop plantation and at least one finger hoeing tool (9) disposed on this support (3) by means of a cross member (6) is arranged for tilling this row of the row crop plantation, and **in that** the tillage device (1) has at least one working height control device for maintaining a constant angle of attack with respect to the soil.

2. The tillage device (1) as claimed in claim 1,
**characterised in that**
each support (3) has at least two finger hoeing tools (9) arranged thereon for tilling one row of the row crop plantation.

3. The tillage device (1) as claimed in claim 1 or claim 2,
**characterised in that**
a working height control device is adjustable and/or a working height control device is arranged on the chassis (2), on at least one support (3), on at least one cross member (6, 25), on at least one longitudinal member (30), on at least one finger hoeing tool support (10), on at least one tool support (29) and/or on at least one finger hoeing tool (9).

4. The tillage device (1) as claimed in any of the preceding claims,
**characterised in that**
a working height control device has at least one parallelogram guide (13), at least one telescoping device, at least one sensor device, at least one support wheel, at least one pair of support wheels, at least one depth limiter, and/or at least one sliding member.

5. The tillage device (1) as claimed in any of the preceding claims,
**characterised in that**
the working height control device has at least one pressure loading and/or relieving device (14).

6. The tillage device (1) as claimed in claim 5,
**characterised in that**
the pressure loading and/or relieving device (14) is adjustable.

7. The tillage device (1) as claimed in any of the preceding claims,
**characterised in that**
the working height control device can be lifted and disengaged from the soil by means of a lifting device.

8. The tillage device (1) as claimed in any of the preceding claims,
**characterised in that**
the tillage device (1) has at least one further tool arranged thereon.

9. The tillage device (1) as claimed in claim 8,
**characterised in that**
at least one tool has a working position and a position of rest.

10. The tillage device (1) as claimed in any of the preceding claims, **characterised in that**
at least one finger hoeing tool (9) has a working position and a position of rest.

11. A method of controlling the working height of at least one finger hoeing tool above one row of a row crop plantation by means of a tillage device (1) that has at least one support (3) on which at least one finger hoeing tool (9) is arranged, said finger hoeing tool (9) being disposed on the support (3) by means of a cross member (6) and said finger hoeing tool (9) having an appropriate angle of attack with respect to the soil when in a working position,
**characterised in that**
at least one support (3) is guided above one row of the row crop plantation and at least one finger hoeing tool (9) disposed on this support (3) by means of a cross member (6) is arranged for tilling one row of the row crop plantation, and **in that** the angle of attack of the finger hoeing tool (9), when in a working position, is maintained constant in the course of the tillage operation by means of at least one working height control device of the tillage device (1).

12. The method as claimed in claim 11,
**characterised in that**
the angle of attack of the finger hoeing tool (9) with respect to the soil is adjusted prior to the tillage operation.

13. The method as claimed in claim 11 or claim 12,
**characterised in that**
the working height control device employed involves at least one parallelogram guide (13), at least one telescoping device, at least one sensor device, at least one support wheel, at least one pair of support wheels, at least one depth limiter, and/or at least one sliding member.

14. The method as claimed in any one of claims 11 to 13,
**characterised in that**
the tillage device (1) employed is a tillage device (1) as claimed in any one of claims 1 to 10.

## Revendications

1. Machine de travail du sol (1) pour cultures en lignes, pourvue
- d'un châssis (2) et
- d'au moins un support (3) sur lequel est disposé au moins un outil de sarclage à doigts (9), l'outil de sarclage à doigts (9) étant disposé sur le support (3) au moyen d'un support transversal (6) et étant, dans une position de travail, orienté pour le travail du sol selon un angle d'attaque par rapport au sol,
**caractérisée en ce que**
au moins un support (3) est disposé au-dessus d'une rangée de la culture en lignes et qu'au moins un outil de sarclage à doigts (9) disposé sur ledit support (3) au moyen d'un support transversal (6) est disposé pour effectuer le travail de ladite rangée de la culture en lignes, et que la machine de travail du sol (1) présente au moins un dispositif de guidage en hauteur en vue de maintenir constant l'angle d'attaque.

2. Machine de travail du sol (1) selon la revendication 1,
**caractérisée en ce que**
pour le travail d'une rangée de la culture en lignes, au moins deux outils de sarclage à doigts (9) sont disposés sur chaque support (3).

3. Machine de travail du sol (1) selon la revendication 1 ou selon la revendication 2,
**caractérisée en ce que**
un dispositif de guidage en hauteur est réglable et/ou qu'un dispositif de guidage en hauteur est disposé sur le châssis (2), sur au moins un support (3), sur au moins un support transversal (6, 25), sur au moins un support longitudinal (30), sur au moins un support de sarcleur à doigts (10), sur au moins un porteoutil (29) et/ou sur au moins un outil de sarclage à doigts (9).

4. Machine de travail du sol (1) selon l'une quelconque des revendications précédentes,
**caractérisée en ce que**
un dispositif de guidage en hauteur présente au moins un bras en parallélogramme (13), au moins un dispositif télescopique, au moins un dispositif capteur, au moins une roue de support, au moins une paire de roues de support, au moins une limitation de profondeur et/ou au moins un élément de glissement.

5. Machine de travail du sol (1), selon l'une quelconque des revendications précédentes,
**caractérisée en ce que**
le dispositif de guidage en hauteur présente au moins un dispositif de charge et/ou de décharge (14).

6. Machine de travail du sol (1) selon la revendication 5,
**caractérisée en ce que**
le dispositif de charge et/ou de décharge (14) est réglable.

7. Machine de travail du sol (1) selon l'une quelconque des revendications précédentes,
**caractérisée en ce que**
le dispositif de guidage en hauteur peut être relevé par un dispositif de relevage.

8. Machine de travail du sol (1) selon l'une quelconque des revendications précédentes,
**caractérisée en ce que**
au moins un autre outil est disposé sur la machine de travail du sol (1).

9. Machine de travail du sol (1) selon la revendication 8,
**caractérisée en ce que**
au moins un outil présente une position de travail et une position de repos.

10. Machine de travail du sol (1) selon l'une quelconque des revendications précédentes,
**caractérisée en ce que**
au moins un outil de sarclage à doigts (9) présente une position de travail et une position de repos.

11. Procédé de guidage en hauteur d'au moins un outil de sarclage à doigts au-dessus d'une rangée d'une culture en lignes au moyen d'une machine de travail du sol (1) qui présente au moins un support (3) sur lequel est disposé au moins un outil de sarclage à doigts (9), l'outil de sarclage à doigts (9) étant disposé sur le support (3) au moyen d'un support transversal (6) et ledit outil de sarclage à doigts (9) présentant, dans une position de travail, un angle d'attaque par rapport au sol,
**caractérisé en ce que**
au moins un support (3) est guidé au-dessus d'une rangée de la culture en lignes et qu'au moins un outil de sarclage à doigts (9) disposé sur ledit support (3) au moyen d'un support transversal (6) est disposé pour effectuer le travail d'une rangée de la culture en lignes, et que l'angle d'attaque de l'outil de sarclage à doigts (9), lorsque celui-ci est en position de travail, est maintenu constant pendant le travail du sol grâce à au moins un dispositif de guidage en hauteur de la machine de travail du sol (1).

12. Procédé selon la revendication 11,
**caractérisé en ce que**
l'angle d'attaque de l'outil de sarclage à doigts (9) par rapport au sol est ajusté avant de commencer le travail du sol.

13. Procédé selon la revendication 11 ou selon la revendication 12,
**caractérisé en ce que**
le dispositif de guidage en hauteur utilisé est au moins un bras en parallélogramme (13), au moins un dispositif télescopique, au moins un dispositif capteur, au moins une roue de support, au moins une paire de roues de support, au moins une limitation de profondeur et/ou au moins un élément de glissement.

14. Procédé selon l'une quelconque des revendications 11 à 13,
**caractérisé en ce que**
la machine de travail du sol (1) utilisée est une machine de travail du sol (1) selon l'une quelconque des revendications 1 à 10.
